# FASCICULE DE BREVET EUROPEEN

(11) **EP 3 328 712 B1**
(45) Date de publication et mention de la délivrance du brevet: **17.07.2019**
(21) Numéro de dépôt: 16756732.0
(22) Date de dépôt: 29.07.2016
(51) Int. Cl.: B62D 25/08, B62D 5/04

(54) **DISPOSITIF DE DIRECTION ASSISTÉE AVEC CALCULATEUR DÉPORTÉ SOUS LA CRÉMAILLÈRE**
SERVOLENKVORRICHTUNG MIT FERNRECHNER UNTER DER ZAHNSTANGE
POWER-STEERING DEVICE WITH REMOTE COMPUTER UNDER THE RACK

(30) Priorité: 31.07.2015 FR 1557393
(43) Date de publication de la demande: 06.06.2018
(73) Titulaire: JTEKT Europe, 69540 Irigny (FR)
(72) Inventeur: REY, Laurent, 69100 Villeurbanne (FR)
(74) Mandataire: Chevalier, Renaud Philippe
(86) Numéro de dépôt international: PCT/FR2016/051982
(87) Numéro de publication internationale: WO 2017/021636

(56) Documents cités:
- EP-A1- 2 514 654
- DE-A1-102007 038 902
- US-A1- 2013 062 137
- MILLER J D ET AL: "DAS SICHERHEITSKONZEPT DER ELEKTROMECHANISCHEN SERVOLENKUNG MIT ZAHNSTANGENANTRIEB", ATZ - AUTOMOBILTECHNISCHE ZEITSCHRIFT, SPRINGER PROFESSIONAL, vol. 101, no. 11, 1 novembre 1999 (1999-11-01), pages 910-912, XP000859879, ISSN: 0001-2785

## Description

La présente invention concerne le domaine technique général des dispositifs de direction assistée pour véhicules, notamment pour véhicules automobiles.

Les dispositifs de direction assistée connus comprennent généralement une crémaillère de direction, qui est montée mobile en translation dans un carter de direction de sorte à pouvoir modifier l'angle de braquage des roues directrices du véhicule, ainsi qu'un moteur d'assistance capable d'entraîner ladite crémaillère.

De plus en plus fréquemment, le moteur d'assistance est un moteur électrique, qui est piloté par un calculateur qui détermine, en temps réel, et en fonction de lois d'assistance prédéterminées, une consigne d'alimentation qu'il applique audit moteur d'assistance.

Le calculateur peut être intégré à un calculateur central du véhicule, ou bien, plus communément, faire l'objet d'un circuit électronique distinct.

Dans tous les cas, le calculateur doit être logé dans un boîtier de commande, qui le protège notamment de l'humidité, des projections d'eau et de la poussière.

Le boîtier de commande doit lui-même être placé dans le compartiment moteur du véhicule, au voisinage du moteur d'assistance auquel il est connecté.

Or, la complexité croissante des véhicules, et le manque d'espace qui en résulte dans le compartiment moteur, rendent de plus en plus difficile l'intégration des différents organes du véhicule, et en particulier du boîtier de commande, dans ledit compartiment moteur.

Une éventuelle miniaturisation du calculateur est certes envisageable, dans une certaine mesure, mais une telle miniaturisation est particulièrement coûteuse, et le gain d'espace obtenu reste de toute manière limité. Le document US2013/062137 A1 décrit le préambule des revendications 1 et 7.

Les objets assignés à l'invention visent par conséquent à proposer un nouvel agencement de dispositif de direction assistée, et plus globalement un nouvel agencement de véhicule, qui permette, à moindre coût, d'améliorer la compacité du dispositif de direction assistée et de faciliter son intégration au sein d'un véhicule.

Les objets assignés à l'invention sont atteints au moyen d'un véhicule équipé d'un dispositif de direction assistée qui comprend au moins une crémaillère de direction et un moteur d'assistance agencé pour entraîner ladite crémaillère de direction, ainsi qu'au moins un calculateur embarqué au sein du véhicule et destiné à piloter ledit moteur d'assistance, ledit véhicule étant caractérisé en ce que le calculateur est placé en majorité, et de préférence en totalité, en-dessous de la crémaillère, ledit véhicule étant caractérisé en ce que le dispositif de direction assistée comprend une coque à l'intérieur de laquelle la crémaillère est guidée en translation, et en ce que ladite coque comprend un emplacement de calculateur agencé pour accueillir le calculateur à l'intérieur de ladite coque, sous ladite crémaillère.

Les objets assignés à l'invention sont également atteints au moyen d'un dispositif de direction assistée destiné à être implanté dans un véhicule, ledit dispositif de direction assistée comprenant au moins une crémaillère de direction, un moteur d'assistance agencé pour entraîner ladite crémaillère de direction, ainsi qu'au moins un calculateur destiné à piloter ledit moteur d'assistance, ledit dispositif étant caractérisé en ce qu'il comprend une coque à l'intérieur de laquelle la crémaillère est guidée en translation et à l'intérieur de laquelle est ménagé un emplacement de calculateur dans lequel est logé le calculateur, de telle sorte le calculateur se trouve situé en majorité, et de préférence en totalité en dessous de la crémaillère, lorsque ledit dispositif est en place sur le véhicule.

Avantageusement, le fait de disposer le calculateur sous la crémaillère, au niveau du soubassement dudit véhicule, dans une zone du véhicule, et plus particulièrement dans une zone du compartiment moteur, qui est libre d'autres organes mécanique, permet d'éviter toute interférence, notamment dans le compartiment moteur, entre d'une part le volume nécessaire à l'embarquement du calculateur et d'autre part le volume nécessaire à l'un quelconque des autres organes du véhicule.

Ainsi, en logeant le calculateur dans une zone non disputée, et en particulier dans une zone éloignée du moteur de propulsion qui assure la propulsion du véhicule, l'invention permet d'éviter les conflits spatiaux entre le dispositif de direction assistée et les autres organes du véhicule, sans qu'il soit nécessaire de réduire à tout prix l'encombrement dudit calculateur.

Avantageusement, l'espace libéré par le transfert du calculateur sous la crémaillère peut en outre profiter à d'autres organes du véhicule, et notamment au moteur assurant la propulsion du véhicule, ce qui permet le cas échéant de réduire d'autant l'encombrement du compartiment moteur, et donc l'encombrement et le poids de la structure du véhicule dans son ensemble.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique, un véhicule équipé d'un dispositif de direction assistée selon l'invention.
La figure 2 illustre, selon une vue d'ensemble en perspective, une variante de réalisation de dispositif de direction assistée selon l'invention.
La figure 3 illustre, selon une vue partielle en perspective, le détail d'implantation du calculateur au sein du dispositif de direction assistée de la figure 2.
La figure 4 illustre, selon une vue de détail en perspective, une embase formant la partie inférieure de la coque qui accueille le mécanisme de direction au sein du dispositif des figures 2 et 3, et dont l'empreinte comprend un emplacement pour le calculateur.
Les figures 5, 6 et 7 illustrent, selon des vues de détail en perspective, la mise en place d'un premier élément de bouclier magnétique, puis du calculateur, puis d'un second élément de bouclier magnétique dans l'embase de la figure 4.
La figure 8 montre le dispositif des figures 2 et 3 vu de dessus.
Les figures 9, 10 et 11 représentent des vues partielles en coupe du dispositif de la figure 8, respectivement deux vues en coupe perpendiculaire à l'axe longitudinal de la crémaillère, orientées vers la gauche puis vers la droite, et une vue en coupe longitudinale, le long de l'axe longitudinal de la crémaillère.

La présente invention concerne un dispositif de direction assistée 1, et plus globalement un véhicule 2, tel qu'un véhicule automobile, équipé d'un tel dispositif de direction assistée 1.

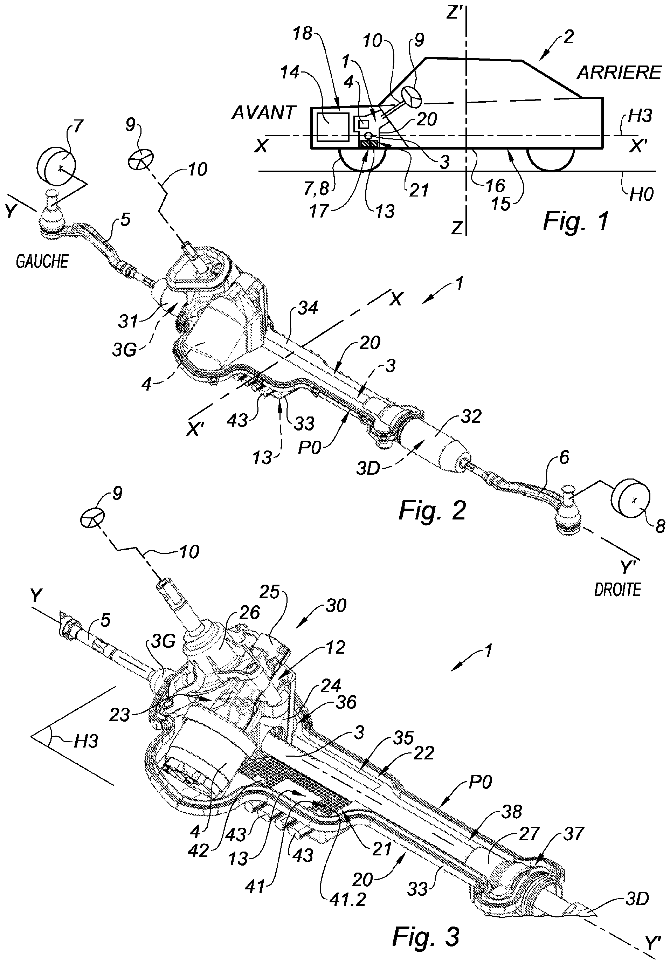

Tel que cela est illustré sur les figures 1 à 3, le dispositif de direction assistée 1 comprend au moins une crémaillère de direction 3 (ci-après « crémaillère ») ainsi qu'un moteur d'assistance 4 agencé pour entraîner ladite crémaillère de direction 3.

De façon connue en soi, la crémaillère de direction 3 est montée mobile et guidée en translation par rapport au véhicule 2, selon l'axe longitudinal (YY') de ladite crémaillère 3.

Ledit axe longitudinal (YY') de la crémaillère est de préférence sensiblement horizontal, et correspond de préférence sensiblement à la direction transverse (gauche-droite) dudit véhicule 2.

La crémaillère 3 est connectée, à chacune de ses extrémités gauche 3G et droite 3D, à une biellette de direction 5, 6 reliée à un porte-fusée portant une roue directrice 7, 8, de sorte que le déplacement en translation de la crémaillère 3 selon son axe longitudinal (YY') permet de modifier l'angle de braquage, c'est-à-dire l'orientation en lacet, des roues directrices (ici les roues avant) gauche 7 et droite 8.

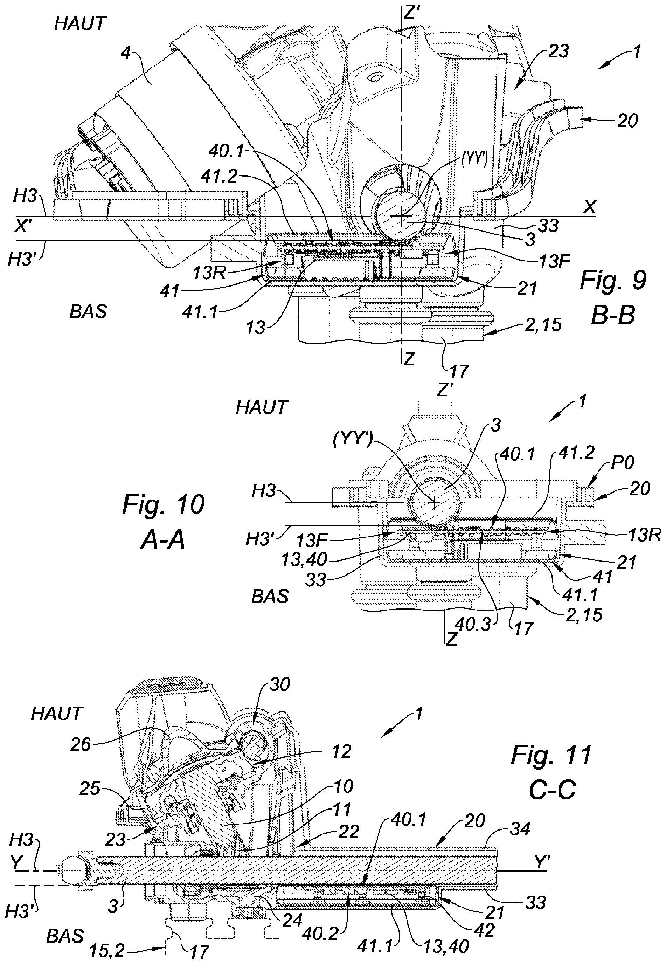

Le dispositif de direction assistée 1 comprend également un volant de conduite 9 permettant au conducteur de commander manuellement la manoeuvre de la crémaillère 3, de préférence par l'intermédiaire d'une colonne de direction 10 qui porte, à l'une de ses extrémités, le volant 9 de conduite, et, à son autre extrémité, un pignon 11 (figure 11) qui engrène sur ladite crémaillère 3.

Le moteur d'assistance 4 sera de préférence un moteur électrique, à double sens d'entraînement (et plus particulièrement à double sens de rotation).

Selon une variante d'entraînement dite « à simple pignon », le moteur d'assistance 4 pourra venir en prise indirectement sur la crémaillère 3, par l'intermédiaire de la colonne de direction 10, de préférence au moyen d'un réducteur à engrenage 12, tel qu'un réducteur à roue tangente et vis sans fin, comme cela est illustré sur la figure 11.

Selon une autre variante d'entraînement possible, le moteur d'assistance 4 pourra venir en prise directement sur la crémaillère 3, séparément de la colonne de direction 10, au moyen d'un second pignon (pour former un mécanisme dit « à double pignon ») ou bien au moyen d'une vis à billes.

On notera à ce titre que la crémaillère 3 peut ainsi s'entendre de toute tige de manoeuvre actionnable par le moteur d'assistance 4 de manière à commander la manoeuvre de braquage des roues directrices 7, 8, et ce, par exemple, que l'entraînement de la crémaillère 3 par le moteur d'assistance 4 soit assuré par un mécanisme à engrenage, dans lequel un pignon 11 entraîné par le moteur d'assistance 4 engrène sur une denture conjuguée de la crémaillère 3 (tel que cela est illustré sur la figure 11), ou bien par une vis à billes entraînée par le moteur d'assistance 4 et coopérant avec un filetage conjugué ménagé dans la crémaillère 3.

Selon l'invention, le dispositif de direction assistée 1 comprend également au moins un calculateur 13 embarqué au sein du véhicule 2 et destiné à piloter ledit moteur d'assistance 4.

Ledit calculateur 13 est avantageusement conçu pour piloter le moteur d'assistance 4 selon des lois d'assistance prédéterminées, stockées dans une mémoire non volatile dudit calculateur 13, et qui permettent typiquement audit calculateur 13 de déterminer une consigne d'alimentation qu'il applique ensuite au moteur d'assistance 4.

Ledit calculateur 13 peut être formé par tout ordinateur, circuit électronique ou automate programmable approprié.

Selon l'invention, et tel que cela est visible sur les figures 1 à 3 et 9 à 11, le calculateur 13 est placé en majorité, et de préférence en totalité, en-dessous de la crémaillère 3.

En d'autres termes, en considérant par convention que le véhicule 2 se trouve sur un sol horizontal H0, le volume hors-tout du calculateur 13, c'est-à-dire l'espace occupé par ledit calculateur 13, est majoritairement (c'est-à-dire à plus de 50 %, voire préférentiellement à plus de 75 %) contenu, et de préférence totalement contenu, verticalement, c'est-à-dire selon la direction verticale (ZZ'), à une altitude inférieure à celle de l'axe longitudinal (YY') de translation de la crémaillère 3, et plus globalement à une altitude inférieure à l'altitude minimale de la matière constitutive de ladite crémaillère 3.

Plus particulièrement, si l'on considère un premier plan de jauge H3 horizontal (c'est-à-dire parallèle au sol H0 sur lequel se trouve le véhicule 2), contenant l'axe longitudinal (YY') de la crémaillère 3, voire si l'on considère un second plan de jauge H3' parallèle audit axe longitudinal (YY') de la crémaillère et tangent au bord inférieur de la crémaillère 3, alors le calculateur 13 est majoritairement, et de préférence entièrement situé sous ledit premier plan de jauge H3, respectivement sous ledit second plan de jauge H3', c'est-à-dire majoritairement et de préférence intégralement contenu dans le demi-espace délimité par ledit plan de jauge H3, respectivement H3', et situé en-dessous dudit plan de jauge H3, H3', c'est-à-dire en pratique compris entre le sol H0 (limite d'altitude basse) et ledit plan de jauge H3, H3' (limite d'altitude haute).

Avantageusement, ce déport vertical du calculateur 13 en-dessous de la crémaillère 3, dans une zone basse, généralement libre sur la majorité des véhicules connus, permet de dégager de l'espace au-dessus de la crémaillère 3, c'est-à-dire au-dessus du plan de jauge H3, H3', et par conséquent de libérer de l'espace pour d'autres organes du véhicule 2, tels que par exemple un moteur de propulsion 14 destiné à assurer la propulsion du véhicule 2.

L'implantation du dispositif de direction assistée 1, de même que l'implantation des organes du véhicule 2 qui environnent ledit dispositif de direction assistée 1, s'en trouve ainsi facilitée.

L'accessibilité audit dispositif de direction assistée 1 ou aux organes voisins est également améliorée grâce à l'agencement proposé par l'invention, ce qui peut simplifier l'assemblage ou la réparation du véhicule 2.

Par ailleurs, outre le fait que le calculateur 13 se trouve en-dessous de la crémaillère 3, c'est-à-dire occupe en majorité sinon en totalité une plage d'altitude inférieure à l'altitude de la crémaillère 3, et plus particulièrement inférieure à l'altitude de l'axe longitudinal (YY') de la crémaillère, le calculateur 13 se trouve également de préférence au moins en partie à l'aplomb (à la verticale) de la crémaillère 3, tel que cela est visible sur les figures 1, 9 et 10, de telle sorte que, en projection verticale (par exemple en projection dans le plan horizontal du sol H0), la surface projetée couverte par le calculateur 13 présente au moins une zone de recouvrement avec la surface projetée de la crémaillère 3.

En d'autres termes, vue du dessus (ou du dessous), dans un plan horizontal perpendiculaire à la direction verticale (ZZ') de projection, la crémaillère 3 empiète sur le calculateur 13 (et réciproquement), du fait que la crémaillère 3 et le calculateur 13 se croisent et se chevauchent au moins partiellement.

Plus particulièrement, le calculateur 13 pourra être disposé sous la crémaillère 3 de telle sorte que, tel que cela est bien visible sur les figures 9 et 10, le bord avant 13F du calculateur 13 dépasse (horizontalement) en saillie avant de la crémaillère 3, tandis que le bord arrière 13R dudit calculateur 13 dépasse (horizontalement) en saillie arrière de ladite crémaillère 3, dans la direction longitudinale (XX') avant-arrière du véhicule 2.

Avantageusement, un tel centrage, ou quasi-centrage, horizontal du calculateur 13, à l'aplomb de la crémaillère 3, permet d'optimiser la compacité du dispositif de direction assistée 1, en réduisant l'encombrement hors-tout dudit dispositif 1 selon la direction longitudinale (XX') avant-arrière du véhicule 2.

Tel que cela est visible sur les figures 1 et 9 à 11, le véhicule 2 présente un soubassement de carrosserie 15.

De façon conventionnelle, un tel soubassement peut notamment comprendre un ou plusieurs longerons 16, qui s'étendent sensiblement selon la direction longitudinale (XX') avant-arrière du véhicule, et qui sont reliés par des traverses (non représentées).

De préférence, le soubassement de carrosserie 15 comprend au moins un berceau 17 qui est disposé transversalement à la direction longitudinale (XX') du véhicule.

Ledit berceau 17 soutient avantageusement un train roulant, ici le train roulant avant sur la figure 1, ledit train roulant étant pourvu de roues directrices 7, 8 dont l'orientation en lacet est commandée par la crémaillère 3, tel que cela a été décrit plus haut.

De façon particulièrement préférentielle, le berceau 17 est disposé sous un compartiment 18 du véhicule.

Ledit compartiment 18 peut de préférence former un compartiment moteur, qui accueille un moteur de propulsion 14 destiné à propulser le véhicule, tel que cela est représenté sur la figure 1.

De manière alternative ou complémentaire, le compartiment 18 peut former, selon une variante de réalisation non représentée, un compartiment à bagages (libre), destiné à accueillir un bagage quelconque, par exemple une valise.

De façon particulièrement préférentielle, le berceau 17 forme tout ou partie du fond inférieur du compartiment 18, de telle sorte que la face supérieure du berceau 17 s'ouvre sur ledit compartiment 18, et, de préférence, s'il s'agit d'un compartiment moteur, de telle sorte que la face supérieure du berceau 17 s'ouvre sous le moteur de propulsion 14, à une altitude inférieure à celle dudit moteur de propulsion 14, et le cas échéant au moins en partie à la verticale du moteur de propulsion 14.

De préférence, le dispositif de direction assistée 1 est alors fixé sur ledit berceau 17, et plus particulièrement à la surface supérieure dudit berceau 17, de telle manière que la crémaillère 3 soit orientée vers le compartiment 18 (c'est-à-dire vers l'intérieur du volume principal dudit compartiment 18, donc, ici, vers le haut), tandis que le calculateur 13 est placé en majorité, et de préférence en totalité, en-dessous de ladite crémaillère 3, de manière à être orienté à l'opposé du compartiment 18 par rapport à ladite crémaillère 3, ici vers le bas, vers le soubassement de carrosserie 15 du véhicule et vers le sol H0 sur lequel circule le véhicule 2.

Avantageusement, l'invention permet donc de placer le calculateur 13 en retrait (ici en retrait inférieur) du compartiment 18, afin de dégager et de préserver l'espace fonctionnel, et plus particulièrement le volume utile principal (destiné au moteur de propulsion 14 et/ou aux bagages), dudit compartiment 18

On notera que, de préférence, le moteur de propulsion 14, si le compartiment 18 est un compartiment moteur, ou bien respectivement le volume libre destiné à accueillir des bagages, si le compartiment 18 est un compartiment à bagage, est majoritairement (à plus de 50 %), et de préférence intégralement, situé au-dessus du second plan de jauge H3' (tangent à la base de la crémaillère 3), voire au-dessus du premier plan de jauge H3 (contenant l'axe longitudinal (YY') de la crémaillère 3), c'est-à-dire à une altitude supérieure à celle du plan de jauge H3, H3' considéré.

De préférence, tel que cela est notamment visible sur les figures 2, 3, 8, 9 et 11, le dispositif de direction assistée 1 comprend une coque 20 à l'intérieur de laquelle la crémaillère 3 est guidée en translation.

De façon particulièrement préférentielle, tel que cela est notamment illustré sur les figures 3, 4 et 9 à 11, ladite coque 20 comprend un emplacement de calculateur 21 agencé pour accueillir le calculateur 13 à l'intérieur de ladite coque 20, sous la crémaillère 3.

Cet agencement permet avantageusement de simplifier l'assemblage du dispositif de direction assistée 1, et de protéger efficacement le calculateur 13 des agressions extérieures.

Plus particulièrement, tel que cela est notamment visible sur la figure 11, la coque 20 délimite de préférence une enceinte 22, qui est traversée par la crémaillère 3 et dans laquelle est enfermé le calculateur 13, et de préférence le moteur d'assistance 4, enceinte 22 qui est avantageusement étanche au moins à la pénétration d'eau liquide et de brouillard salin.

On désigne par « brouillard salin » les gouttelettes d'eau salée en suspension dans l'air, qui peuvent notamment apparaître lorsque le véhicule 2 circule à proximité d'un littoral marin, ou bien sur une route enneigée traitée par du sel.

De préférence, l'enceinte 22 est étanche à la pénétration par ruissellement ou par projection non seulement de l'eau liquide, mais également d'autres corps étrangers liquides, susceptibles de provenir d'autres organes du véhicule, tels que huile moteur, carburant, liquide lave-vitre, etc. ainsi qu'à la pénétration de corps étrangers solides de type poussière ou granulat.

Les éléments, tels que le calculateur 13, et le cas échéant le moteur d'assistance 4, qui se trouvent protégés par la coque 20, à l'abri à l'intérieur de l'enceinte 22, sont donc efficacement protégés de la corrosion, de l'encrassement, et des chocs.

A ce titre, on notera que les interfaces de la coque 20 permettant des communications fonctionnelles entre l'enceinte 22 et l'extérieur du dispositif de direction assistée 1 sont avantageusement pourvues d'organes d'étanchéité, de type joints, par exemple en élastomère.

Ainsi, par exemple, tel que cela est visible sur la figure 2, les biellettes de direction 5, 6 reliées aux extrémités 3G, 3D crémaillère 3 émergent de la coque 20 au niveau d'interfaces étanches garnies de soufflets 31, 32 flexibles et extensibles, de préférence en élastomère.

En outre, la coque 20, avantageusement rigide, facilite la manutention et la manipulation (d'ensemble) du dispositif de direction assistée 1 lorsqu'il faut approvisionner ledit dispositif 1 sur la ligne de production et intégrer ledit dispositif 1 dans le véhicule 2.

Avantageusement, l'enceinte 22 partagée par le calculateur 13, le moteur d'assistance 4, et une portion de la crémaillère 3, renferme également une structure porteuse 23 (ou « ossature ») rigide, qui supporte le moteur d'assistance 4 et guide la crémaillère 3 en translation.

Ladite structure porteuse 23 peut notamment comprendre, tel que cela est illustré sur les figures 3 et 11, un premier sous-ensemble 30 formé d'un empilement de carters 24, 25, 26, de préférence métalliques, à savoir un premier carter de direction 24, qui guide la crémaillère 3, un carter de réducteur 25, auquel est fixé le moteur d'assistance 4 et qui contient le réducteur 12 permettant audit moteur d'assistance 4 d'entraîner la colonne de direction 10, et un carter de capteur de couple 26 qui contient un capteur de couple mesurant, par exemple par la déformation d'une barre de torsion, le couple dit « couple volant » exercé par le conducteur sur le volant de conduite 9.

La structure porteuse 23 peut également comporter, tel que cela est visible sur la figure 3, un second carter de direction 27, distinct et distant du premier carter de direction 24, et plus globalement distinct et distant du premier sous-ensemble 30, et qui forme un palier satellite complétant le guidage en translation de la crémaillère 3.

La structure porteuse 23 et la crémaillère 3 sont avantageusement disposées dans la coque 20, au-dessus de l'emplacement de calculateur 21, à l'abri dans l'enceinte 22 qui les isole de l'environnement du dispositif de direction assistée 1.

De préférence, tel que cela est notamment illustré sur les figures 2 et 11, la coque 20 est formée par la réunion, selon un plan de joint P0, d'au moins une première portion de coque, inférieure, dite « embase » 33, et d'une seconde portion de coque, supérieure, dite « cloche » 34, qui sont rapportées et fixées l'une sur l'autre de part et d'autre de la crémaillère 3, de sorte à couvrir la crémaillère 3 respectivement par le dessous et par le dessus.

On notera que, de préférence, le plan de joint P0, qui marque la séparation entre l'embase 33 et la cloche 34, est sensiblement parallèle à l'axe longitudinal (YY') de la crémaillère 3, voire sensiblement horizontal (et par exemple au moins en partie, voire en majorité, sensiblement contenu dans le premier plan de jauge H3), de sorte que l'embase 33 est contenue en-dessous du plan de joint P0, tandis que la cloche 34 est contenue au-dessus dudit plan de joint P0.

Un tel fractionnement de la coque en une embase 33 et une cloche 34, initialement distincte de l'embase 33, et qui vient recouvrir ladite embase 33 pour fermer la coque 20, afin de délimiter l'enceinte 22, permet notamment de simplifier la fabrication de la coque 20 et l'assemblage du dispositif de direction assistée 1.

En particulier, tel que cela est illustré sur la figure 3, un tel agencement permettra de disposer l'embase 33 sur un support de montage (« marbre »), l'ouverture de ladite embase 33 étant dirigée vers le haut, pour ensuite rapporter et fixer dans ladite embase 33 les organes du dispositif de direction assistée 1, et plus particulièrement le calculateur 13, le moteur d'assistance 4, la crémaillère 3, et plus globalement la structure porteuse 23 susmentionnée.

A ce titre, l'emplacement de calculateur 21 est de préférence formé par une portion d'une empreinte 35 qui est ménagée en creux dans l'embase 33 et qui s'ouvre sur le plan de joint P0 (donc, ici, vers le haut).

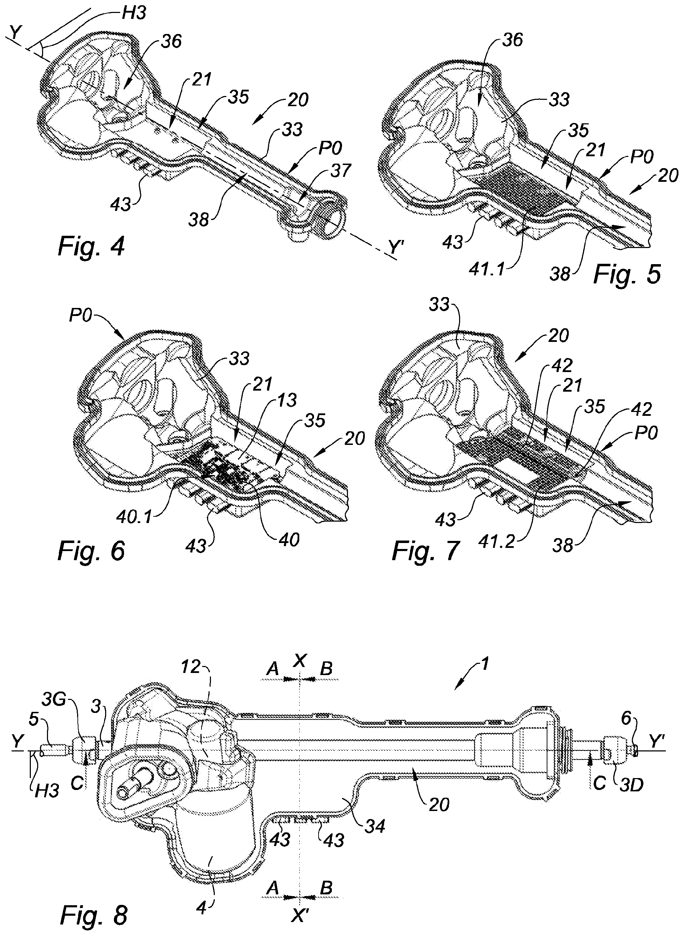

De même, tel que cela est notamment visible sur les figures 3 et 4, l'empreinte 35 de l'embase 33 pourra avantageusement comporter un ou des emplacements 36, 37 pour la structure porteuse 23, et plus particulièrement un emplacement 36 pour le premier carter de direction 24 et un emplacement 37 pour le second carter de direction (satellite) 27, ainsi qu'un emplacement 38 pour le passage de la crémaillère 3.

De préférence, tel que cela est visible sur les figures 3 et 4, l'emplacement 38 pour le passage de la crémaillère 3 s'étendra sensiblement parallèlement à l'axe longitudinal (YY') de la crémaillère 3 et sera interposé longitudinalement entre l'emplacement 36 pour premier carter de direction et l'emplacement 37 pour second carter de direction. Ledit emplacement 38 pour le passage de la crémaillère présentera de préférence une forme hémi-cylindrique.

De préférence, afin notamment de faciliter la fabrication de l'embase 33 par moulage, tous ces emplacements 21, 36, 37, 38 seront formés en creux au sein d'une même empreinte 35, et s'ouvriront tous sur le plan de joint P0, voire communiqueront tous les uns avec les autres, de sorte que la crémaillère 3, le calculateur 13 et le moteur d'assistance 4, voire globalement la structure porteuse 23, se retrouveront dans une même enceinte 22 commune.

Par rapport au plan de joint P0 (et donc par rapport au premier plan de jauge H3), l'emplacement pour calculateur 21 sera avantageusement plus profond que l'emplacement pour le passage de la crémaillère 38, de manière à permettre l'installation du calculateur 13 dans le fond (inférieur) de l'empreinte 35 de l'embase 33, en-dessous de la crémaillère 3, et de surcroît à l'aplomb (à la verticale) de ladite crémaillère 3.

On notera que, de même, le calculateur 13 sera avantageusement placé en-dessous du moteur d'assistance 4, et en-dessous du réducteur 12 et du carter de réducteur 25 (i.e. à une altitude inférieure à ces éléments).

Tel que cela est illustré notamment sur la figure 9, le moteur d'assistance 4 est en effet de préférence placé en majorité, voire en totalité, à une altitude supérieure à la plage d'altitude (hors-tout) occupée par le calculateur 13, dans le demi-espace qui est opposé au demi-espace dans lequel se trouve ledit calculateur 13, par rapport au premier plan de jauge H3.

De même, tel que cela est notamment illustré sur la figure 11, le réducteur 12, respectivement le carter de réducteur 25, est de préférence placé en majorité, et plus préférentiellement en totalité, à une altitude supérieure à la plage d'altitude (hors-tout) occupée par le calculateur 13, dans le demi-espace qui est opposé au demi-espace dans lequel se trouve ledit calculateur 13, par rapport au premier plan de jauge H3.

Plus globalement, on notera que, grâce à l'invention, le calculateur 13 peut être déporté à (grande) distance du moteur d'assistance 4, et le cas échéant du réducteur 12, sans être accolé à ce(s) dernier(s).

Avantageusement, la dissociation et la séparation spatiale du moteur d'assistance 4 et du calculateur 13 permet notamment d'utiliser un calculateur 13 dont la superficie est particulièrement étendue, et par exemple dont la longueur (et/ou la largeur) est plus grande que la largeur hors-tout du moteur d'assistance 4 (considérée perpendiculairement à l'arbre dudit moteur), puisque l'encombrement dudit calculateur 13 n'est pas corrélé aux dimensions du moteur d'assistance 4, ni à plus forte raison limité par les dimensions du moteur d'assistance 4.

En effet, grâce à ladite dissociation spatiale, aucune contrainte constructive n'oblige à inscrire ledit calculateur 13 dans le prolongement du moteur d'assistance 4, à l'intérieur d'une enveloppe (fictive ou matérialisée par un carter) dont les dimensions hors-tout n'excéderaient pas les dimensions hors-tout de l'enveloppe dudit moteur d'assistance 4 (et notamment le diamètre hors-tout du moteur d'assistance).

L'invention permet ainsi d'éviter d'avoir recours à un calculateur miniaturisé, qui serait plus coûteux qu'un calculateur de grande taille.

Une fois que les organes du dispositif de direction assistée 1 seront placés, et le cas échéant fixés, dans l'embase 33, la cloche 34 sera ensuite rapportée sur l'embase 33, de manière à recouvrir le calculateur 13, le moteur d'assistance 4, et plus globalement la structure porteuse 23, puis ladite cloche 34 sera fixée à ladite embase 33, par exemple par collage ou thermosoudage, selon une jonction étanche (notamment étanche à l'eau liquide et au brouillard salin) qui suit le tracé du plan de joint P0.

De préférence, l'embase 33 et/ou la cloche 34 sera réalisée, préférentiellement d'un seul tenant, dans un matériau polymère, et plus préférentiellement dans un polymère thermoplastique permettant une fabrication par moulage par injection.

A titre d'exemple, on pourra utiliser à cet effet un Polyamide (PA), un Polyamide aromatique (PPA), un Polybuthylene Terephatlate (PBT), un Polyéthylène Térephtalate (PET), un Polypropylène (PP), ou une PolyCétone (PK).

De préférence, le matériau polymère utilisé pourra être renforcé de fibres, par exemple de fibres de verre, de carbone ou d'aramide, ou tout mélange de fibres contenant au moins deux de ces catégories de fibres.

Le ou les matériaux polymères utilisés pour former l'embase 33 et/ou respectivement la cloche 34 seront choisis de sorte à être rigides ou semi-rigides, c'est-à-dire à présenter typiquement un module d'Young supérieur à 3 GPa, au moins sur la plage prévisible de températures de fonctionnement du dispositif de direction assistée 1, c'est-à-dire au moins sur la plage allant de -40°C à +125°C.

La rigidité de la coque 20 garantira avantageusement une protection mécanique efficace du dispositif 1, et plus particulièrement du moteur d'assistance 4 et du calculateur 13, notamment contre les impacts de corps solides (gravillons), tout en facilitant la manipulation du dispositif 1 lors de son implantation au sein du véhicule 2.

On notera que, bien que l'on préfère, notamment par économie et pour simplifier l'assemblage du dispositif de direction assistée 1, loger le calculateur 13 dans la même coque 20 que la crémaillère 3 et le moteur d'assistance 4, il serait parfaitement envisageable, en variante, et sans sortir du cadre de l'invention, que le calculateur 13 soit placé dans un boîtier de protection séparé, distinct et distant de la coque 20 recevant la crémaillère 3 et le moteur d'assistance 4, si bien que ledit calculateur 13 ne partagerait pas ladite coque 20 (et en particulier pas l'enceinte 22) avec la crémaillère 3 et le moteur d'assistance 4.

De préférence, que le calculateur 13 soit par ailleurs placé dans la coque 20 qui accueille le moteur d'assistance 4 ou bien à l'extérieur de ladite coque 20, dans un boîtier de protection « satellite » séparé, le calculateur 13 se présente, tel que cela est notamment visible sur la figure 6 ou la figure 11, sous la forme d'une carte électronique 40 ou d'un boîtier électronique, sensiblement parallélépipédique (ou à tout le moins inscriptible dans une forme parallélépipédique), qui présente une face supérieure 40.1 (ici sensiblement horizontale) plus étendue que ses faces latérales 40.2, 40.3 (ici sensiblement verticales).

En d'autres termes, par souci de compacité, le calculateur 13 présente de préférence une forme relativement "aplatie", l'espace occupé par ledit calculateur 13 s'étendant principalement selon deux dimensions (ici horizontales), à savoir en largeur selon (XX') et en longueur selon (YY'), ces deux dimensions étant chacune plusieurs fois supérieures à la troisième dimension (épaisseur), ici considérée selon la verticale (ZZ').

Que le calculateur 13 soit disposé à l'extérieur de la coque 20 ou, de préférence, à l'intérieur de ladite coque 20, ledit calculateur 13 est alors de préférence disposé à plat sous la crémaillère 3, sa face supérieure 40.1 étant sensiblement horizontale.

En d'autres termes, l'assiette du calculateur 13, c'est-à-dire son inclinaison en roulis et/ou en tangage par rapport à l'horizontale (et donc par rapport au premier plan de jauge H3) sera de préférence inférieure à 30 degrés, à 20 degrés, à 10 degrés voire à 5 degrés.

Une telle disposition du calculateur 13 "à plat" sous la crémaillère 3, et sensiblement parallèlement à l'axe longitudinal (YY') de ladite crémaillère 3, permettra avantageusement d'exploiter efficacement l'espace libre situé sous ladite crémaillère 3, tout en offrant un maintien solide et stable du calculateur 13.

Lorsque le calculateur 13 est logé dans l'empreinte 35 de l'embase 33, une telle disposition "à plat" simplifie le montage du calculateur 13 dans la coque 20 et contribue à limiter la profondeur nécessaire de l'emplacement pour calculateur 21, et par conséquent contribue à réduire l'encombrement hors-tout de la coque 20 et plus globalement l'encombrement hors-tout du dispositif de direction assistée 1.

Par ailleurs, le calculateur 13 est de préférence entouré et protégé par un bouclier électromagnétique 41.

Un tel bouclier forme avantageusement une cage de Faraday qui, en interposant un écran électriquement conducteur entre le calculateur 13 et son environnement, évite les interférences entre ledit calculateur 13 et son environnement.

De préférence, tel que cela est illustré sur les figures 5 et 9 à 11, ledit bouclier électromagnétique 41 comprend une première nappe conductrice 41.1, inférieure, formée par une première feuille ou une première grille en matériau électriquement conducteur et placée en dessous du calculateur 13.

Ladite première nappe conductrice 41.1, de préférence plane, sera avantageusement placée et fixée au fond de l'empreinte 35 de l'embase 33, afin de tapisser le fond de l'emplacement pour calculateur 21, avant que le calculateur 13 ne soit à son tour rapporté par-dessus ladite première nappe conductrice 41.1, dans ce même emplacement pour calculateur 21.

De préférence, tel que cela est notamment illustré sur les figures 3, 7 et 9 à 11, le bouclier électromagnétique 41 comprend également une seconde nappe conductrice 41.2, supérieure, qui est préférentiellement distincte de la première nappe conductrice 41.1, et qui est formée par une seconde feuille ou une seconde grille en matériau électriquement conducteur, et placée au-dessus du calculateur 13, entre le calculateur 13 et la crémaillère 3.

La seconde nappe conductrice 41.2 vient avantageusement recouvrir le calculateur 13 après que celui-ci a été posé sur la première nappe conductrice 41.1, dans l'emplacement pour calculateur 21, et avant la mise en place de la crémaillère 3 et de la structure porteuse 23, tel que cela est illustré sur la figure 7.

Avantageusement, une telle structure stratifiée, comprenant successivement (dans l'ordre vertical) une première couche formée par la première nappe 41.1, une seconde couche formée par le calculateur 13, et une troisième couche formée par la seconde nappe 41.2, est particulièrement peu coûteuse à fabriquer, et particulièrement facile à assembler par simple empilement desdites couches.

On peut ainsi intégrer aisément et de façon très stable le bouclier électromagnétique 41 à l'enceinte 22, à l'abri à l'intérieur de la coque 20, et de surcroît au plus près du calculateur 13 pour garantir une protection électromagnétique optimale.

Tel que cela est visible sur la figure 7, le calculateur 13, et plus globalement le "sandwich" formé par le calculateur 13 enveloppé de tout ou partie de son bouclier électromagnétique 41, pourra être fixé à la coque 20, et ainsi solidarisé (directement, ou bien indirectement via l'embase 33) avec la structure porteuse 23, au moyen de vis de fixation 42.

La coque 20, et plus particulièrement l'embase 33, pourra par ailleurs être pourvue de connecteurs 43 étanches, formant des interfaces de connexion électrique entre le calculateur 13 et l'extérieur de la coque 20 (l'extérieur du dispositif 1), afin de permettre notamment le raccordement du calculateur 13 à la batterie du véhicule et au réseau informatique de bord du véhicule (« Controller Area Network »).

Bien entendu, l'invention concerne également en tant que tel un dispositif de direction assistée 1 permettant de loger le calculateur 13 de manière déportée, à distance du moteur d'assistance 4, sous la crémaillère 3.

A ce titre, l'invention concerne en tant que tel un dispositif de direction assistée 1 destiné à être implanté dans un véhicule 2, ledit dispositif de direction assistée 1 comprenant au moins une crémaillère de direction 3, un moteur d'assistance 4 agencé pour entraîner ladite crémaillère de direction 3, ainsi qu'au moins un calculateur 13 destiné à piloter ledit moteur d'assistance 4, ledit dispositif 1 comprenant une coque 20 à l'intérieur de laquelle la crémaillère 3 est guidée en translation et à l'intérieur de laquelle est ménagé un emplacement de calculateur 21 dans lequel est logé le calculateur 13, de telle sorte que le calculateur 13 se trouve situé en majorité, et de préférence en totalité en dessous de la crémaillère 3, lorsque ledit dispositif 1 est en place sur le véhicule 2.

De préférence, tel que cela a été décrit plus haut, le calculateur 13 et le moteur d'assistance 4 se trouvent (tous les deux) à l'intérieur de la coque 20, dans une même enceinte 22 également traversée par la crémaillère 3.

En d'autres termes, le moteur d'assistance 4, le calculateur 13, ainsi qu'une portion de la crémaillère 3 sous laquelle le calculateur 13 prend place, partagent de préférence une même enceinte 22 commune, étanche à l'eau liquide et au brouillard salin, ainsi que le cas échéant aux autres corps étrangers liquides ou solides, enceinte 22 qui est comprise entre (et délimitée par) l'embase 33 et la cloche 34 qui coiffe ladite embase 33.

Bien entendu, l'invention n'est nullement limitée aux seules variantes de description décrites dans ce qui précède, l'homme du métier étant notamment à même d'isoler ou de combiner librement entre elles l'une ou l'autre des caractéristiques susmentionnées, ou de leur substituer des équivalents.

## Revendications

1. Véhicule (2) équipé d'un dispositif de direction assistée (1) qui comprend au moins une crémaillère de direction (3) et un moteur d'assistance (4) agencé pour entraîner ladite crémaillère de direction (3), ainsi qu'au moins un calculateur (13) embarqué au sein du véhicule (2) et destiné à piloter ledit moteur d'assistance (4), ledit calculateur (13) étant placé en majorité, et de préférence en totalité, en-dessous de la crémaillère (3), ledit véhicule étant **caractérisé en ce que** le dispositif de direction assistée (1) comprend une coque (20) à l'intérieur de laquelle la crémaillère (3) est guidée en translation, et **en ce que** ladite coque (20) comprend un emplacement de calculateur (21) agencé pour accueillir le calculateur (13) à l'intérieur de ladite coque (20), sous ladite crémaillère (3).

2. Véhicule selon la revendication 1 **caractérisé en ce que** la coque (20) est formée par la réunion, selon un plan de joint (P0), d'au moins une première portion de coque, inférieure, dite « embase » (33), et d'une seconde portion de coque, supérieure, dite « cloche » (34), qui sont rapportées et fixées l'une sur l'autre de part et d'autre de la crémaillère (3), de sorte à couvrir la crémaillère respectivement par le dessous et par le dessus, et **en ce que** l'emplacement de calculateur (21) est formé par une portion d'une empreinte (35) qui est ménagée en creux dans l'embase (3) et qui s'ouvre sur le plan de joint (P0).

3. Véhicule selon la revendication 1 ou 2 **caractérisé en ce que** le véhicule (2) présente un soubassement de carrosserie (15) comprenant au moins un berceau (17) qui est disposé transversalement à la direction longitudinale (XX') du véhicule, sous un compartiment (18) du véhicule qui forme un compartiment moteur, accueillant un moteur de propulsion (14) destiné à propulser le véhicule, et/ou un compartiment à bagages, destiné à accueillir un bagage quelconque, ledit berceau (17) soutenant un train roulant pourvu de roues directrices (7, 8) dont l'orientation en lacet est commandée par la crémaillère (3), et **en ce que** le dispositif de direction assistée (1) est fixé sur ledit berceau (17) de telle manière que la crémaillère (3) est orientée vers le compartiment (18), tandis que le calculateur (13) est placé en majorité, et de préférence en totalité, en-dessous de ladite crémaillère (3), de manière à être orienté à l'opposé du compartiment (18) par rapport à ladite crémaillère (3), vers le soubassement de carrosserie (15) du véhicule et vers le sol (H0) sur lequel circule le véhicule.

4. Véhicule selon l'une des revendications précédentes **caractérisé en ce que** le calculateur (13) se trouve au moins en partie à l'aplomb de la crémaillère (3), de telle sorte que, en projection verticale, la surface projetée couverte par le calculateur (13) présente au moins une zone de recouvrement avec la surface projetée de la crémaillère (3).

5. Véhicule selon l'une des revendications précédentes **caractérisé en ce que** le calculateur (13) se présente sous la forme d'une carte électronique (40) ou d'un boîtier électronique, sensiblement parallélépipédique, qui présente une face supérieure (40.1) plus étendue que ses faces latérales (40.2, 40.3), et **en ce que** ledit calculateur (13) est disposé à plat sous la crémaillère (3), sa face supérieure (40.1) étant sensiblement horizontale.

6. Véhicule selon l'une des revendications précédentes **caractérisé en ce que** le calculateur (13) est entouré et protégé par un bouclier électromagnétique (41) qui comprend une première nappe conductrice (41.1), inférieure, formée par une première feuille ou une première grille en matériau électriquement conducteur et placée en dessous du calculateur (13), et une seconde nappe conductrice (41.2), supérieure, qui est distincte de la première nappe conductrice (41.1), et qui est formée par une seconde feuille ou une seconde grille en matériau électriquement conducteur et placée au-dessus du calculateur (13), entre le calculateur (13) et la crémaillère (3).

7. Dispositif de direction assistée (1) destiné à être implanté dans un véhicule (2), ledit dispositif de direction assistée (1) comprenant au moins une crémaillère de direction (3), un moteur d'assistance (4) agencé pour entraîner ladite crémaillère de direction, ainsi qu'au moins un calculateur (13) destiné à piloter ledit moteur d'assistance, ledit dispositif (1) étant **caractérisé en ce qu'**il comprend une coque (20) à l'intérieur de laquelle la crémaillère (3) est guidée en translation et à l'intérieur de laquelle est ménagé un emplacement de calculateur (21) dans lequel est logé le calculateur (13), de telle sorte que le calculateur (13) se trouve situé en majorité, et de préférence en totalité en dessous de la crémaillère (3), lorsque ledit dispositif (1) est en place sur le véhicule (2).

8. Dispositif selon la revendication 7 **caractérisé en ce que** le calculateur (13) et le moteur d'assistance (4) se trouvent à l'intérieur de la coque (20), dans une même enceinte (22) traversée par la crémaillère (3).

## Patentansprüche

1. Fahrzeug (2), ausgerüstet mit einer Servolenkvorrichtung (1), die mindestens eine Lenkzahnstange (3) und einen Unterstützungsmotor (4) umfasst, angeordnet, um die Lenkzahnstange (3) anzutreiben, sowie mindestens einen Rechner (13), der innerhalb des Fahrzeugs (2) eingebaut ist und dazu bestimmt ist, den Unterstützungsmotor (4) zu pilotieren, wobei der Rechner (13) zum Großteil, und vorzugsweise zur Gänze, unter der Zahnstange (3) platziert ist, wobei das Fahrzeug **dadurch gekennzeichnet ist, dass** die Servolenkvorrichtung (1) ein Gehäuse (20) umfasst, in dessen Inneren die Zahnstange (3) translationsgeführt ist, und dadurch, dass das Gehäuse (20) eine Einbaustelle für den Rechner (21) umfasst, die angeordnet ist, um den Rechner (13) im Inneren des Gehäuses (20) unter der Zahnstange (3) aufzunehmen.

2. Fahrzeug nach Anspruch 1, **dadurch gekennzeichnet, dass** das Gehäuse (20) durch das Zusammentreffen an einer Fügestelle (P0) mindestens eines ersten unteren, "Sockel" (33) genannten Gehäuseabschnitts und eines zweiten oberen, "Glocke" (34) genannten Gehäuseabschnitts gebildet wird, die beiderseits der Zahnstange (3) aufeinander angebracht und befestigt werden, um die Zahnstange jeweils von unten und von oben abzudecken, und dadurch, dass die Einbaustelle für den Rechner (21) durch einen Abschnitt eines Abdrucks (35) gebildet wird, der als Hohlraum in den Sockel (3) eingearbeitet ist, und der sich zu der Fügestelle (P0) öffnet.

3. Fahrzeug nach Anspruch 1 oder 2, **dadurch gekennzeichnet, dass** das Fahrzeug (2) einen Unterboden (15) aufweist, der mindestens einen Träger (17) umfasst, der quer zur Längsrichtung (XX') des Fahrzeugs unter einem Raum (18) des Fahrzeugs angeordnet ist, der einen Motorraum bildet, der einen Antriebsmotor (14) aufnimmt, der dazu bestimmt ist, das Fahrzeug anzutreiben, und/oder einen Gepäckraum, der dazu bestimmt ist, irgendein Gepäckstück aufzunehmen, wobei der Träger (17) ein Achsaggregat stützt, das mit gelenkten Rädern (7, 8) versehen ist, deren Gierausrichtung durch die Zahnstange (3) gesteuert wird, und dadurch, dass die Servolenkvorrichtung (1) derart an dem Träger (17) fixiert ist, dass die Zahnstange (3) zu dem Raum (18) ausgerichtet ist, während der Rechner (13) zum Großteil, und vorzugsweise zur Gänze, unter der Zahnstange (3) platziert ist, um entgegengesetzt zu dem Raum (18) im Verhältnis zu der Zahnstange (3) zu dem Unterboden (15) des Fahrzeugs und zum Boden (H0) ausgerichtet zu sein, auf dem das Fahrzeug fährt.

4. Fahrzeug nach einem der vorstehenden Ansprüche, **dadurch gekennzeichnet, dass** sich der Rechner (13) mindestens teilweise lotrecht zur Zahnstange (3) befindet, sodass in einer vertikalen Projektion die durch den Rechner (13) abgedeckte projizierte Oberfläche mindestens eine Überdeckungszone mit der projizierten Oberfläche der Zahnstange (3) aufweist.

5. Fahrzeug nach einem der vorstehenden Ansprüche, **dadurch gekennzeichnet, dass** sich der Rechner (13) in der Form einer elektronischen Karte (40) oder einer im Wesentlichen quaderförmigen Elektronikeinheit präsentiert, die eine Oberseite (40.1) aufweist, die ausgedehnter ist, als ihre lateralen Seiten (40.2, 40.3) und dadurch, dass der Rechner (13) flach unter der Zahnstange (3) angeordnet ist, wobei ihre Oberseite (40.1) im Wesentlichen horizontal ist.

6. Fahrzeug nach einem der vorstehenden Ansprüche, **dadurch gekennzeichnet, dass** der Rechner (13) durch einen elektromagnetischen Schild (41) umgeben und geschützt ist, der eine erste, untere leitfähige Bahn (41.1) umfasst, die durch eine erste Folie oder ein erstes Gitter aus einem elektrisch leitfähigen Material gebildet ist, und unter dem Rechner (13) platziert ist, und eine zweite, obere leitfähige Bahn (41.2), die sich von der ersten leitfähigen Bahn (41.1) unterscheidet und die durch eine zweite Folie oder ein zweites Gitter aus einem elektrisch leitfähigen Material gebildet ist, und über dem Rechner (13), zwischen dem Rechner (13) und der Zahnstange (3) platziert ist.

7. Servolenkvorrichtung (1), die dazu bestimmt ist, in ein Fahrzeug (2) eingebaut zu werden, wobei die Servolenkvorrichtung (1) mindestens eine Lenkzahnstange (3), einen Unterstützungsmotor (4), angeordnet, um die Lenkzahnstange anzutreiben, sowie mindestens einen Rechner (13) umfasst, der dazu bestimmt ist, den Unterstützungsmotor zu pilotieren, wobei die Vorrichtung (1) **dadurch gekennzeichnet ist, dass** sie ein Gehäuse (20) umfasst, in dessen Inneren die Zahnstange (3) translationsgeführt ist, und in dessen Inneren eine Einbaustelle eines Rechners (21) vorgesehen ist, an der der Rechner (13) derart aufgenommen ist, dass sich der Rechner (13) zum Großteil, und vorzugsweise zur Gänze unter der Zahnstange (3) situiert befindet, wenn die Vorrichtung (1) in dem Fahrzeug (2) vorhanden ist.

8. Vorrichtung nach Anspruch 7, **dadurch gekennzeichnet, dass** sich der Rechner (13) und der Unterstützungsmotor (4) im Inneren des Gehäuses (20), in einem selben abgeschlossenen Raum (22) befinden, der durch die Zahnstange (3) durchquert wird.

## Claims

1. A vehicle (2) equipped with a power steering device (1) which comprises at least one steering rack (3) and one assist motor (4) arranged to drive said steering rack (3), as well as at least one onboard calculator (13) within the vehicle (2) and intended to pilot said assist motor (4), said calculator (13) being mostly, and preferably entirely, placed below the rack (3), said vehicle being **characterized in that** the power steering device (1) comprises a shell (20) inside which the rack (3) is guided in translation, and **in that** said shell (20) comprises a calculator location (21) arranged to accommodate the calculator (13) inside said shell (20), under said rack (3).

2. The vehicle according to claim 1, **characterized in that** the shell (20) is formed by the combination, according to a parting plane (P0), of at least one lower first shell portion, called « base » (33), and one upper second shell portion, called « bell-housing » (34), which are attached and fastened to each other on either side of the rack (3), so as to cover the rack respectively from below and from above, and **in that** the calculator location (21) is formed by a portion of an imprint (35) which is formed recessed in the base (3) and which opens onto the parting plane (P0).

3. The vehicle according to claim 1 or 2, **characterized in that** the vehicle (2) has a body understructure (15) comprising at least one cradle (17) which is disposed transversely to the longitudinal direction (XX') of the vehicle, under a compartment (18) of the vehicle which forms an engine compartment, accommodating a propulsion engine (14) intended to propel the vehicle, and/or a luggage compartment, intended to accommodate any luggage, said cradle (17) supporting a running gear provided with steered wheels (7, 8) whose yaw orientation is controlled by the rack (3), and **in that** the power steering device (1) is fastened on said cradle (17) so that the rack (3) is orientated toward the compartment (18), whereas the calculator (13) is mostly, and preferably entirely, placed below said rack (3), so as to be orientated opposite to the compartment (18) with respect to said rack (3), toward the body understructure (15) of the vehicle and toward the ground (H0) on which the vehicle circulates.

4. The vehicle according to any of the preceding claims, **characterized in that** the calculator (13) is located at least partially in line with the rack (3), so that, in vertical projection, the projected surface covered by the calculator (13) has at least one overlapping area with the projected surface of the rack (3).

5. The vehicle according to any of the preceding claims, **characterized in that** the calculator (13) is in the form of an electronic board (40) or of a substantially parallelepiped electronic casing which has an upper face (40.1) wider than its lateral faces (40.2, 40.3), and **in that** said calculator (13) is disposed in a flattened manner under the rack (3), its upper face (40.1) being substantially horizontal.

6. The vehicle according to any of the preceding claims, **characterized in that** the calculator (13) is surrounded and protected by an electromagnetic shield (41) which comprises a lower first conductive ply (41.1), formed by a first sheet or a first grid made of an electrically-conductive material and placed below the calculator (13), and an upper second conductive ply (41.2), which is distinct from the first conductive ply (41.1), and which is formed by a second sheet or a second grid made of an electrically-conductive material and placed above the calculator (13), between the calculator (13) and the rack (3).

7. A power steering device (1) intended to be set up in a vehicle (2), said power steering device (1) comprising at least one steering rack (3), one assist motor (4) arranged to drive said steering rack (3), as well as at least one calculator (13) intended to pilot said assist motor (4), said device (1) being **characterized in that** it comprises a shell (20) inside which the rack (3) is guided in translation and inside which a calculator location (21) housing the calculator (13) is formed, so that the calculator (13) is mostly, and preferably entirely, located below the rack (3), when said device (1) is placed on the vehicle (2).

8. The device according to claim 7, **characterized in that** the calculator (13) and the assist motor (4) are located inside the shell (20), in the same enclosure (22) crossed by the rack (3).
